# EUROPÄISCHE PATENTSCHRIFT

(11) **EP 1 936 895 B1**
(45) Veröffentlichungstag und Bekanntmachung des Hinweises auf die Patenterteilung: **22.02.2012**
(21) Anmeldenummer: 07024875.2
(22) Anmeldetag: 21.12.2007
(51) Int. Cl.: H04L 25/02, H04L 12/40, H04L 25/08

(54) **Einrichtung zur Übertragung von Daten innerhalb eines leistungselektronischen Systems**
Device for transmitting data within a electronic system
Dispositif de transmission de données à l'intérieur d'un système électronique

(30) Priorität: 23.12.2006 DE 102006061494
(43) Veröffentlichungstag der Anmeldung: 25.06.2008
(73) Patentinhaber: SEMIKRON Elektronik GmbH & Co. KG, 90431 Nürnberg (DE)
(72) Erfinder: Königsmann, Gunter, 91058 Erlangen (DE); Bode, Rüdiger, 90763 Fürth (DE); Mühlhöfer, Alexander, 90522 Oberasbach (DE); Katzenberger, Günter, 97084 Würzburg (DE); Hofmair, Markus, 91154 Roth (DE)

(56) Entgegenhaltungen:
- EP-A2- 0 969 633
- DE-A1-102004 004 488
- DE-A1-102008 057 627
- US-B1- 6 567 520

## Beschreibung

Die Erfindung betrifft eine Einrichtung zur Übertragung von Daten innerhalb eines leistungselektronischen Systems, insbesondere eines Treibers eines leistungselektronischen Bauelements. Die Erfindung betrifft außerdem ein Verfahren zum Betrieb einer derartigen Einrichtung.

Unter leistungselektronischen Systemen sind z.B. aus mehreren Einzelkomponenten wie z.B. Leistungshalbleiterelementen, zusammengesetzte Leistungsschalter oder ähnliches zu verstehen. Derartige Systeme sind heute zunehmend modular aufgebaut und enthalten beispielsweise den eigentlichen Halbleiterschalter sowie eine entsprechende Ansteuerschaltung, nämlich den sogenannten Treiber.

Treiber in leistungselektronischen Systemen besitzen im allgemeinen eine galvanisch getrennte Primär- und Sekundärseite. Wegen der zunehmenden Systemkomplexität wird heute immer mehr eine Kommunikation, d.h. ein Datenaustausch bzw. eine Datenübertragung zwischen einzelnen Komponenten des Systems, insbesondere auch zwischen Primär- und Sekundärseite gewünscht. Zu übertragende Daten sind einfache Schaltsignale, Fehlerrückmeldungen, Übertragung von Messgrößen, wie Temperatur oder Spannung, bis hin zu Programmcode für programmierbare Komponenten des Systems.

Heute erfolgt eine Datenübertragung z.B. zwischen Primär- und Sekundärseite von leistungselektronischen Treibern über Impulse, welche von RC-Gliedern erzeugt werden. Die Datenraten sind hierbei meist sehr gering. Eine Fehlerkorrektur oder eine repetitive Datenübertragung ist hierbei nicht möglich. Eine Möglichkeit zur Schaffung von mehreren getrennten, in dieselbe Richtung gerichteten Datenkanälen über einen einzigen Übertrager ist ebenso nicht möglich. Eine ausreichende Absicherung eines derartigen Impulsübertragers, um diesen für eine entsprechend gewünschte Datenübertragung verfügbar zu machen, erfordert einen sehr hohen Zeitaufwand. Eine sekundärseitige Datenerfassung mit einer zugehörigen Datenübertragung analoger Information von der Sekundärseite zur Primärseite erfolgt bisher nur analog und erfordert einen hohen schaltungstechnischen Aufwand, wie z.B. einen zusätzlichen Übertragungsweg.

Aus der DE 10 2004 004 488 A1 ist ein lokales Netz mit übertragerloser Signalübertragung bekannt.

Aus der EP 0 969 633 A2 ist eine Treibereinheit mit einem ersten und einem zweiten über einen jeweiligen Widerstand geführten Ausgangsanschluss bekannt.

Aus der US 6,567,520 B1 ist ein Verfahren und eine Vorrichtung zur Überwachung von Zuständen bei Telefoneinrichtungen bekannt.

Aufgabe der vorliegenden Erfindung ist es, eine verbesserte Einrichtung zur Übertragung von Daten in einem leistungselektronischen System und ein Verfahren zu deren Betrieb anzugeben.

Die Aufgabe wird gelöst durch eine Einrichtung zur Übertragung von Daten innerhalb eines leistungselektronischen Systems, insbesondere innerhalb eines Treibers für ein leistungselektronisches Bauelement. Die Einrichtung umfasst einen Sender, welcher Differenzausgänge, also einen invertierenden und nicht invertierenden Ausgang zur Abgabe eines Differenzsignals umfasst, wobei das Differenzsignal den Daten entspricht, diese also repräsentiert. Die Einrichtung umfasst einen zwei Eingänge aufweisenden Übertrager, wobei die zwei Eingänge des Übertragers mit den zwei Differenzausgängen des Senders nach Art einer Vollbrücke verschaltet sind, d.h. dass der eine Differenzausgang des Senders mit einem Eingang des Übertragers und der andere Differenzausgang des Senders mit dem anderen Eingang des Übertragers über je einen ohmschen Schutzwiderstand verbunden sind. Der Übertrager weist außerdem zwei Ausgänge auf, zwischen welchen ein ohmscher Spannungsteiler angeschlossen ist. Der ohmsche Spannungsteiler wiederum weist zwei Knoten auf, über die die zwei differenziellen Eingänge, also ein invertierender und ein nicht invertierender Eingang, eines Differenzverstärkers angeschlossen sind. Der Differenzverstärker weist einen Ausgang zur Ausgabe eines den Daten entsprechenden Ausgangssignals auf.

Somit sendet also der Sender als Vollbrücke ein den zu übertragenden Daten entsprechendes Signal als Gegentaktsignal über Schutzwiderstände an den Eingang eines Übertragers. Die Schutzwiderstände bilden gleichzeitig mit dem Schutz des Senders vor einem kurzgeschlossenen Übertrager oder beim versehentlichen Versenden eines Gleichspannungssignals den primärseitigen Abschluss der Einrichtung zur Datenübertragung.

Im Gegensatz zu bekannten Hochgeschwindigkeitsübertragern benötigt die erfindungsgemäße Einrichtung keinen Übertrager mit Mittelanzapfung, die auf der Mittenspannung des Empfängers in Form des Differenzverstärkers liegt. Der ohmsche Spannungsteiler ist nämlich derart konstruiert, dass auch so eine für leistungselektronische Anwendungen benötigte Sicherheit gegeben ist. Die erfindungsgemäße Einrichtung wird dadurch günstiger bezüglich der Herstellungskosten, da die Fertigung eines spannungsfesten Hochgeschwindigkeitssignalübertragers mit Mittelanzapfung teurer ist als die zusätzlichen Widerstände des Spannungsteilers. Aus dem gleichen Grund ist außerdem keine Gleichtaktfilterung, z.B. durch eine Gleichtaktdrossel notwendig. Der Spannungsteiler bildet den sekundärseitigen Abschluss der Hochgeschwindigkeitsdatenübertragungsstrecke. Das übertragene Signal wird am Spannungsteiler durch den Differenzverstärker gemessen, wobei der Spannungsteiler so dimensioniert ist, dass das Signal am Eingang des Differenzverstärkers bei maximaler Signalstärke des vom Sender abgegebenen Signals und maximal in der Einrichtung zu erwartender Störstrahlung (EMV) immer noch mit Sicherheit in dessen Gleichtakteingangsspannungsbereich bleibt.

Durch die erfindungsgemäße Einrichtung wird eine Hochgeschwindigkeitsdatenübertragungsstrecke im Bereich z.B. 100 MBit/s realisiert. Mehrere Datenkanäle über einen einzigen Übertrager und eine massiv repetitive Signalübertragung sind möglich. Durch die differenzielle Auswertung des übertragenen Signals am Differenzverstärker und Auswertung des Signals an einem niederohmigen Widerstand, nämlich dem ohmschen Spannungsteiler, kann eine höhere Sicherheit als bei der bisherigen Impulsübertragung erreicht werden. Hierdurch wird ein Spannungshub von Primär- zu Sekundärseite, getrennt durch den Übertrager, von z.B. 30 kV/us möglich.

Die Implementierung der Einrichtung ist komplett in Niedervoltlogik (z.B. 3,3 V-Logik) möglich. Die Datensicherheit wird dann nicht durch eine hohe Signalspannung, sondern durch hohe übertragene Ströme garantiert. Dies ermöglicht die Verwendung von kostengünstigen Standardbausteinen und den Wegfall einer zusätzlichen geregelten Betriebsspannung für die Datenübertragung in der Einrichtung.

Als Übertrager kann ein nahezu beliebiger Übertrager ohne besondere Berücksichtigung von dessen Kernparametern verwendet werden. Durch einen suboptimal gewählten Übertrager nimmt zwar beispielsweise die Signalstärke auf der Sekundärseite ab und der Stromverbrauch auf der Primärseite zu, die Schaltung arbeitet jedoch immer noch fehlerfrei und innerhalb der Spezifikation.

Die Einrichtung ist fehlersicher, da ein Kurzschluss des Signalübertragers zu keiner Beschädigung führt. Für die Interpretation des übertragenen Signals ist kein teuerer Fensterkomparator notwendig. Ein Standarddifferenzverstärker ist völlig ausreichend, wenn das für die Datenübertragung verwendete Datenübertragungsprotokoll eine korrekte Detektion eines Ausfalls des Senders erlaubt.

Der Differenzverstärker kann daher beispielhaft ein low voltage differential signaling (LVDS) Komparator oder ein LVPECL-Empfänger sein. Derartige Komparatoren zeichnen sich durch einen besonders kleinen Gleichtaktbereich aus.

Der Spannungsteiler weist einen ersten Widerstand zwischen den Knoten und einen zweiten und dritten Widerstand auf, wobei der zweite Widerstand vom einen Knoten zu einem Ausgang des Übertragers und der dritte Widerstand vom anderen Knoten zum anderen Ausgang des Übertragers führt.

Durch einen derartigen dreifachen Spannungsteiler kann die Ausgangsspannung des Übertragers an dessen Ausgängen durch geeignete Dimensionierung von erstem bis drittem Widerstand optimal an die Eingänge des Differenzverstärkers angepasst werden. Dadurch ist die Schaltung sehr gut davor geschützt, dass in diese ein Störsignal einkoppelt, das das Nutzsignal stört, zumal dieses Nutzsignal am Differenzverstärker mit einem großen Gleichtakteingangsbereich interpretiert wird.

Der erste Widerstand kann zwei in Reihe geschaltete Teilwiderstände mit einem Mittelanschluss enthalten, wobei dann am Mittelanschluss eine Spannungsquelle zur Einspeisung einer Mittenspannung des Differenzverstärkers angeschlossen ist. Durch eine derartige Schaltung werden der Spannungsteiler und insbesondere die beiden Knoten durch die Spannungsquelle bezüglich der Gleichtaktsignale auf der Mittenspannung des Differenzverstärkers gehalten. So kann ein besonders kostengünstiger Differenzverstärker verwendet werden, welcher z.B. keinen Ausgang zur Bereitstellung seiner Gleichtaktmittenspannung aufweist. Der Spannungsquelle kann hierbei z.B. ein Pufferkondensator, der die Mittenspannung gegen EMV abpuffert, zugeordnet sein. Die Mittenspannung kann hierbei ebenfalls durch einen Spannungsteiler aus einer Versorgungsspannung erzeugt werden. Da jegliche EMV-Störung, egal ob kapazitiv oder induktiv, keinen Gleichanteil besitzt, können hierbei die Widerstände des besagten Spannungsteilers relativ hochohmig gewählt werden.

Der Sender kann jeweils mehrere parallele Differenzausgänge aufweisen, d.h. mehrere invertierende und/oder nicht invertierende Ausgänge. An jedem dieser Differenzausgänge ist dann ein Widerstand mit seinem jeweiligen einen Ende angeschlossen, wobei die jeweiligen anderen Enden sämtlicher Widerstände, die entweder zu invertierenden oder nicht invertierenden Ausgängen gehören, verbunden sind. An den Verbindungsstellen der Widerstände entstehen somit zwei Anschlussknoten, welche dann wieder auf die beiden Eingänge des Übertragers geführt sind.

Durch eine derartige Aufteilung der am Sender angeschlossenen Schutzwiderstände können somit viele Halbbrücken parallelisiert und somit z.B. mehrere einfache digitale Ausgänge eines PLDs, FPGAs oder eines billigen Bustreibers zu leistungsfähigen Halbbrücken zusammen geschaltet werden. Sind die Schutzwiderstände hierbei hoch genug, dass die einzelnen Gatterausgänge, aus denen abschließend die Vollbrücke besteht, gegeneinander treiben können, ohne Schaden zu nehmen, kann ein abgeschwächtes Signal vom Sender zum Übertrager hin abgegeben werden, indem eine gewisse Anzahl der Gatterausgänge, die den Sender bilden, gegen die das Signal sendenden Ausgänge treiben und so die Datenübertragungsstrecke ohne aufwändiges externes Prüfgerät durchgemessen werden. Zur Messung werden also entsprechend zu einer Halbbrücke verschaltete Differenzausgänge gegentaktig und im normalen Betrieb zur Erreichung der maximalen Signalstärke gleichtaktig betrieben.

Die Einrichtung wird dadurch zu einer selbstausmessenden Schaltung, d.h. dass die Signalstärke des vom Sender abgegebenen Signals reduziert werden kann, um zu detektieren, ab welcher Senderstärke die Sekundärseite, also der Differenzverstärker reagiert. Dies bedeutet eine besonders starke Reduktion der Prüfkosten der fertigen Einrichtung.

Die Einrichtung kann ein zwischen einen der Differenzausgänge des Senders und einen der Eingänge des Übertragers geschalteten Gleichanteilfilter aufweisen. Hierzu ist besonders ein Kondensator geeignet. Ein derartiger Gleichanteilfilter ist nur notwendig, wenn nicht garantiert werden kann, dass die Vollbrücke aus Sender und Schutzwiderständen, die den Übertrager ansteuert, den Übertrager eben nicht mit einem unzulässigen Gleichanteil belastet.

Die Einrichtung bildet zwischen den Differenzausgängen des Senders und den Eingängen des Differenzverstärkers einen Signalpfad. An diesem kann mit ihrem einen Ende eine Clampingdiode angeschlossen werden, die mit ihrem anderen Ende an einer Versorgungsspannung (z.B. V_{cc} oder Masse) angeschlossen ist. Insbesondere wenn Clampingdioden zwischen Schutzwiderständen und Übertrager am Signalpfad angeschlossen sind, ist dieser durch die Schutzwiderstände von den Ausgängen des Senders entkoppelt, wodurch die Ausgänge des Senders zusätzlich geschützt werden. Sind Clampingdioden am Eingang des Differenzverstärkers angeordnet bzw. zwischen Übertrager und Spannungsteiler, bieten diese einen Schutz des Differenzverstärkers vor extremen Störsignalen.

Die erfindungsgemäße Einrichtung kann in einem Treiber für ein leistungselektronisches Bauelement angeordnet sein, wobei der Sender auf der Sekundärseite und der Differenzverstärker auf der Primärseite des Treibers angeordnet sind. Hierdurch wird die Möglichkeit eröffnet, Daten im Treiber von der Sekundärzur Primärseite zu übertragen und dies schnell mit hoher Datenrate.

Hinsichtlich des Verfahrens wird die Aufgabe gelöst durch ein Verfahren zum Betrieb einer erfindungsgemäßen Einrichtung in der Ausgestaltung des Senders mit mehreren parallelen Differenzausgängen und jeweils daran angeschlossenen Schutzwiderständen.

Das erfindungsgemäße Verfahren sieht vor, zur Datenübertragung zumindest einen Teil der parallelen Differenzausgänge gleichtaktig und zur Vermessung des Signalpfades bzw. der gesamten Einrichtung zumindest einen Teil der Differenzausgänge gegentaktig zu betreiben.

Das erfindungsgemäße Verfahren wurde zusammen mit seinen Vorteilen bereits im Zusammenhang mit der erfindungsgemäßen Einrichtung erläutert.

Für eine Beschreibung der Erfindung wird auf die Ausführungsbeispiele der Zeichnungen verwiesen. Es zeigen, jeweils in einer schematischen Prinzipskizze:
- Fig. 1: einen Treiber für einen Leistungshalbleiterschalter mit integrierter Datenübertragungsstrecke,
- Fig. 2: die Datenübertragungsstrecke aus Fig. 1 in alternativen Ausführungsformen.

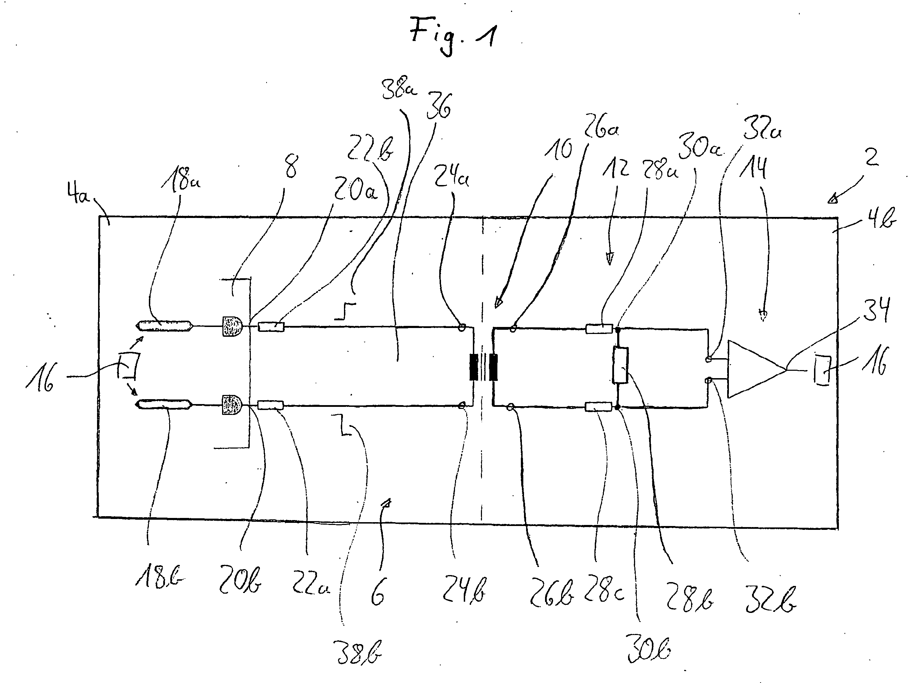

Fig. 1 zeigt einen erfindungswesentlichen Teil eines Treibers 2 für einen nicht dargestellten Leistungshalbleiterschalter. Der Treiber 2 weist eine Primärseite 4a und eine Sekundärseite 4b auf. Der Treiber 2 weist eine erfindungsgemäße Einrichtung, nämlich eine störsichere Hochgeschwindigkeitsdatenübertragungsstrecke 6 auf. Diese umfasst als Sender beispielhaft einen Bustreiber 8, einen Übertrager 10, einen Spannungsteiler 12 und einen Differenzverstärker 14 als Empfänger.

Der Bustreiber 8 wird auf nicht dargestellte Weise, z.B. über einen Microcontroller eines Messsystems, mit Daten 16 versorgt, welche in diesem in Form eines nicht invertierten 18a und invertierten Signals 18b vorliegen bzw. diesem zugeführt werden. Der Bustreiber 8 verfügt daher über einen invertierenden 20a und einen nicht invertierenden Ausgang 20b, an welchen jeweils ein Schutzwiderstand 22a,b mit seinem einen Ende angeschlossen ist. Mit ihren jeweils anderen Enden sind die Schutzwiderstände 22a,b mit den beiden Eingängen 24a,b des Übertragers 10 verbunden. Der Übertrager 10 bewirkt die galvanische Trennung von Primär- 4a und Sekundärseite 4b des Treibers 2 bezüglich der Übertragungsstrecke 6.

Zwischen den Ausgängen 26a,b des Übertragers 10 ist der Spannungsteiler 12 angeschlossen. Dieser ist aus drei in Reihe geschalteten Widerständen 28a-c aufgebaut, wodurch zwischen den Widerständen 28a und 28b ein erster Knoten 30a und zwischen den Widerständen 28b und 28c ein zweiter Knoten 30b gebildet ist. Die Knoten 30a,b sind wiederum respektive mit dem invertierenden 32a und nicht invertierenden Eingang 32b des Differenzverstärkers 14 verbunden. Der Differenzverstärker 14 weist außerdem einen Ausgang 34 auf, an welchem die Daten 16 in Form eines nicht dargestellten Ausgangssignals ausgegeben werden.

Entlang der Übertragungsstrecke 6 ist so ein Signalpfad 36 gebildet, welcher zwei parallele, mit Differenzsignalen 38a,b zur Übertragung der Daten 16 belegte Signalpfade 52a,c und 52b,d zwischen Bustreiber 8 und Übertrager 10 bzw. Übertrager 10 und Differenzverstärker 14 aufweist.

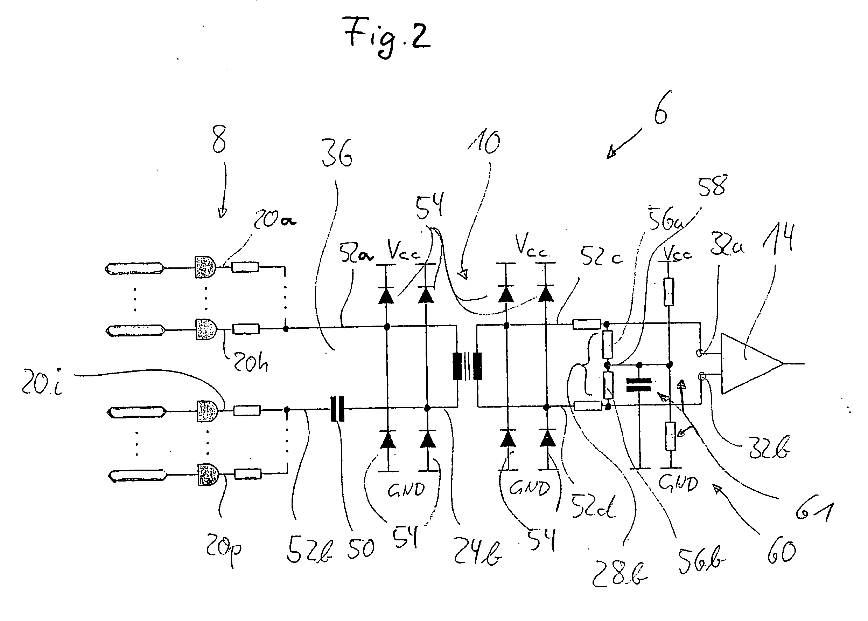

Fig. 2 zeigt die Übertragungsstrecke 6 aus Fig. 1 mit verschiedenen Ergänzungen, die alternativ oder in Kombination auftreten können. So ist in einer ersten Ausführungsform in den Signalpfad 36 zwischen dem Bustreiber 8 und dem Übertrager 10 bzw. genauer gesagt in die vom Ausgang 20b zum Eingang 24b führende, signalführende elektrische Leitung ein Kondensator 50 geschaltet. Der Kondensator 50 ist ein sogenannter Sicherheitskondensator und dient dazu, den Übertrager 10 vor einem unzulässigen, vom Bustreiber 8 gesendeten Gleichtaktsignal zu schützen.

Alternativ oder zusätzlich können in einer weiteren Variante der Übertragungsstrecke 6 an die den Signalpfad 36 bildenden Leitungen 52a-d je zwei Schutzdioden 54 angeschlossen sein, welche jeweils von den Leitungen 52a-d einerseits zu einer Versorgungsspannung V_{cc} und andererseits zur Masse GND führen. Die Schutzdioden 54 bzw. Clampingdioden schützen einerseits die Ausgänge des Bustreibers 8 und andererseits die Eingänge des Differenzverstärkers 14.

Alternativ oder zusätzlich ist in Fig. 2 der Widerstand 28b aus Fig. 1 durch die Reihenschaltung zweier Teilwiderstände 56a,b ersetzt, welche somit einen zusätzlichen Spannungsteiler bezüglich der Eingänge 32a,b des Differenzverstärkers 14 bilden. Der Knoten 58 zwischen den Teilwiderständen 56a,b ist über eine Spannungsquelle 60 versorgt, die diesen mit der Mittenspannung des Differenzverstärkers 14 versorgt. Die Spannungsquelle 60 umfasst hierzu ebenfalls in bekannter Weise einen zwischen der Versorgungsspannung V_{cc} und Masse GND angeordneten, nicht näher bezeichneten Spannungsteiler mit Pufferkondensator 61.

Optional ist in Fig. 2 außerdem ein alternativer Bustreiber 8 benutzt, welcher über z.B. anstelle von nur zwei Ausgängen 20a und 20b, wie in Fig. 1, über insgesamt sechzehn derartiger Ausgänge 20a bis 20p besitzt. Die ersten acht Ausgänge 20a bis 20h verfügen über jeweils eigene Widerstände 22a bis 22h, welche dann wiederum gemeinsam auf die Leitung 52a geführt sind. Die zweiten acht Ausgänge 20i bis 20p sind über entsprechende Widerstände 22i bis 22p auf die Leitung 52b geführt.

Der Bustreiber 8 stellt somit auf den Leitungen 52a und 52b ein aus jeweils acht parallelen Ausgängen 20a bis 20h und 20i bis 20p parallelisiertes Ausgangssignal zur Verfügung. Im regulären Betrieb der Übertragungsstrecke 6 werden die jeweils acht parallel geschalteten Ausgänge 20a bis 20h und 20i bis 20p jeweils synchron, also für sich gleichtaktig innerhalb der Achtergruppen betrieben, so dass insgesamt ein gegentaktiges differenzielles Datensignal auf den Leitungen 52a und 52b entsteht.

Zu Testzwecken können jedoch innerhalb der Achtergruppen einzelne der Ausgänge 20a-h gegeneinander treiben bzw. betrieben werden; ebenso die zweite Achtergruppe der Ausgänge 20i bis 20p. Auf den Leitungen 52a bis 52b entsteht so ein der vorher beschriebenen Situation gegenüber deutlich abgeschwächtes differenzielles Signal, welches den Übertrager 10 erreicht. Die gesamte Übertragungsstrecke 6 bis zum Differenzverstärker 14 kann so getestet bzw. auf deren Empfindlichkeit und Störsicherheit vermessen werden.

### Bezugszeichenliste

2 Treiber
4a,b Primär-, Sekundärseite
6 Übertragungsstrecke
8 Bustreiber
10 Übertrager
12 Spannungsteiler
14 Differenzverstärker
16 Daten
18a, b Signal
20a-p Ausgang
22a,b Schutzwiderstand
24a,b Eingang
26a,b Ausgang
28a-c Widerstand
30a,b Knoten
32a,b Eingang
34 Ausgang
36 Signalpfad
38a,b Differenzsignal
50 Kondensator
52a-d Leitung
54 Schutzdiode
56a,b Teilwiderstand
58 Knoten
60 Spannungsquelle
61 Spannungsteiler mit Pufferkondensator
V_{cc} Versorgungspannung
GND Masse

## Patentansprüche

1. Einrichtung (6) zur Übertragung von Daten (16) für ein leistungselektronisches System (2),
- mit einem an seinen Differenzausgängen (20a-p) ein den Daten (16) entsprechendes Differenzsignal (38a,b) abgebenden Sender (8),
- mit einem Übertrager (10), dessen Eingänge (24a,b) mit den Differenzausgängen (20a-p) des Senders (8) nach Art einer Vollbrücke verschaltet sind, wobei jeder Differenzausgang (20a-p) mit einem der Eingänge (24a,b) des Übertragers (10) über einen ohmschen Schutzwiderstand (22a-p) verbunden ist,
- mit einem zwischen den Ausgängen (26a,b) des Übertragers (10) angeschlossenen ohmschen Spannungsteiler (12),
- wobei der Spannungsteiler (12) zwei Knoten (30a,b) aufweist, an denen die Eingänge (32a,b) eines Differenzverstärkers (14) angeschlossen sind,
- wobei der Spannungsteiler (12) einen ersten Widerstand (28b) zwischen den Knoten (30a,b) und einen zweiten (28a) und dritten (28c) Widerstand aufweist, der von je einem Knoten (30a,b) zu je einem Ausgang (26a,b) des Übertragers (10) führt,
- und der Differenzverstärker (14) einen Ausgang (34) zur Ausgabe eines den Daten (16) entsprechenden Ausgangssignals aufweist.

2. Einrichtung (6) nach Anspruch 1, bei der Differenzverstärker (14) ein LVDS-Empfänger oder ein VPECL-Empfänger ist.

3. Einrichtung (6) nach Anspruch 1, bei der der erste Widerstand (28b) zwei in Reihe geschaltete Teilwiderstände (56a,b) mit einem Mittelanschluss (58) enthält, an dem eine Spannungsquelle (60) zur Einspeisung einer Mittenspannung des Differenzverstärkers (14) angeschlossen ist.

4. Einrichtung (6) nach einem der vorhergehenden Ansprüche, bei der der Sender (8) mehrere, parallele Differenzausgänge (22a-p) mit je einem an diesem angeschlossenen Schutzwiderstand (20a-p) aufweist, und die Schutzwiderstände (20a-p) an der dem Sender (8) abgewandten Seite verbunden sind.

5. Einrichtung (6) nach einem der vorhergehenden Ansprüche, mit einem zwischen einem der Differenzausgänge (20a-p) des Senders (8) und einem der Eingänge (24a,b) des Übertragers (10) geschalteten Gleichanteilsfilter (50), insbesondere einem Kondensator.

6. Einrichtung (6) nach einem der vorhergehenden Ansprüche, mit einer mit ihrem einen Ende an einer Versorgungsspannung (V_{cc}, GND) angeschlossenen Clampingdiode (54), die mit ihrem anderen Ende am zwischen einem der Differenzausgänge (20a-p) des Senders (8) und einem der Eingänge (32a,b) des Differenzverstärkers (14) gebildeten Signalpfad (36,52a-d) angeschlossen ist.

7. Einrichtung (6) nach einem der vorhergehenden Ansprüche, die in einem Treiber (2) eines leistungselektronischen Bauelements angeordnet ist, bei der der Sender (8) auf der Sekundärseite (4b) des Treibers und der Differenzverstärker (14) auf der Primärseite (4a) des Treibers angeordnet ist.

## Claims

1. A device (6) for the transfer of data (16) for a power electronics system (2),
- with a transmitter (8) outputting at its difference output ports (20a-p) a difference signal (38a, b) corresponding to the data (16),
- with a transformer (10), whose input ports (24a, b) are connected with the difference output ports (20a-p) of the transmitter (8) in the form of a full bridge, wherein
each difference output port (20a-p) is connected with one of the input ports (24a,b) of the transformer (10) via a protective ohmic resistance (22a-p),
- with an ohmic voltage divider (12) connected between the output ports (26a, b) of the transformer (10), wherein
the voltage divider (12) has two nodes (30a, b) to which the input ports (32a, b) of a difference amplifier (14) are connected, wherein
the voltage divider (12) has a first resistance (28b) between the nodes (30a, b) and a second (28a) and a third (28c) resistance, which in each case lead from a node (30a, b) to an output port (26a, b) of the transformer (10)
- and the difference amplifier (14) has an output port (34) for the output of an output signal corresponding to the data (16).

2. The device (6) in accordance with Claim 1,
in which the difference amplifier (14) is an LVDS receiver or a VPECL receiver.

3. The device (6) in accordance with Claim 1,
in which the first resistance (28b) contains two sub-resistances (56a, b) connected in series, with a central port (58), to which a voltage source (60) is connected for the supply of a central voltage of the difference amplifier (14).

4. The device (6) in accordance with one of the preceding claims,
in which the transmitter (8) has a plurality of parallel difference output ports (22a-p) with a protective resistance (20a-p) connected to each of these, and the protective resistances (20a-p) are connected on the side facing away from the transmitter (8).

5. The device (6) in accordance with one of the preceding claims,
with a DC-component filter (50), in particular a capacitor, connected between one of the difference output ports (20a-p) of the transmitter (8) and one of the input ports (24a, b) of the transformer (10).

6. The device (6) in accordance with one of the preceding claims,
with a clamping diode (54) connected at its one end to a supply voltage (V_{cc}, GND), which diode with its other end is connected to a signal path (36, 52a-d) formed between one of the difference output ports (20a-p) of the transmitter (8) and one of the input ports (32a, b) of the difference amplifier (14).

7. The device (6) in accordance with one of the preceding claims,
which is arranged in a driver (2) of a power electronics component, in which the transmitter (8) is arranged on the secondary side (4b) of the driver and the difference amplifier (14) is arranged on the primary side (4a) of the driver.

## Revendications

1. Dispositif (6) pour la transmission de données (16) pour un système d'électronique de puissance (2), comprenant
- un émetteur (8) envoyant sur ses sorties différentielles (20a-p) un signal de différence (38a, b) correspondant aux données (16),
- un transmetteur (10), dont les entrées (24a, b) sont connectées avec les sorties différentielles (20a-p) de l'émetteur (8) à la façon d'un pont intégral, chaque sortie différentielle (20a-p) étant reliée à l'une des entrées (24a, b) du transmetteur (10) au moyen d'une résistance de protection (22a-p) ohmique,
- un diviseur de tension (12) ohmique, raccordé entre les sorties (26a, b) du transmetteur (10),
- le diviseur de tension (12) présentant deux noeuds (30a, b) sur lesquels les entrées (32a, b) d'un amplificateur différentiel (14) sont raccordées,
- le diviseur de tension (12) présentant une première résistance (28b) entre les noeuds (30a, b) et une seconde résistance (28a) et une troisième résistance (28c), qui va d'un noeud (30a, b) à une sortie (26a, b) du transmetteur (10),
- et l'amplificateur différentiel (14) présentant une sortie (34) pour l'édition d'un signal de sortie correspondant aux données (16).

2. Dispositif (6) selon la revendication 1, sur lequel l'amplificateur différentiel (14) est un récepteur LVDS ou un récepteur VPECL.

3. Dispositif (6) selon la revendication 1, sur lequel la première résistance (28b) contient deux résistances partielles (56a, b) montées en série avec un branchement central (58), sur lequel est raccordée une source de tension (60) pour l'injection d'une tension centrale de l'amplificateur différentiel (14).

4. Dispositif (6) selon l'une des revendications précédentes, sur lequel l'émetteur (8) présente plusieurs sorties différentielles parallèles (22a-p) comprenant chacune une résistance de protection (20a-p) raccordée à cet émetteur, et les résistances de protection (20a-p) sont reliées sur le côté opposé à l'émetteur (8).

5. Dispositif (6) selon l'une des revendications précédentes, comprenant un filtre de fraction identique (50) monté entre l'une des sorties différentielles (20a-p) de l'émetteur (8) et l'une des entrées (24a, b) du transmetteur (10), en particulier un condensateur.

6. Dispositif (6) selon l'une des revendications précédentes, comprenant une diode de blocage (clamping) (54) raccordée par l'une de ses extrémités à une tension d'alimentation (V_{cc}, GND), laquelle diode est raccordée par son autre extrémité sur un chemin de signal (36, 52a-d) formé entre l'une des sorties différentielles (20a-p) de l'émetteur (8) et l'une des entrées (32a, b) de l'amplificateur différentiel.

7. Dispositif (6) selon l'une des revendications précédentes, lequel est disposé dans un driver (2) d'un composant d'électronique de puissance, sur lequel l'émetteur (8) est disposé sur le côté secondaire (4b) du driver et l'amplificateur différentiel (14) est disposé sur le côté primaire (4a) du driver.
